# EUROPÄISCHE PATENTSCHRIFT

(11) **EP 0 486 911 B1**
(45) Veröffentlichungstag und Bekanntmachung des Hinweises auf die Patenterteilung: **18.10.1995**
(21) Anmeldenummer: 91119137.7
(22) Anmeldetag: 11.11.1991
(51) Int. Cl.: H01M 8/00, H01M 8/12, H01M 8/14, F24H 1/06

(54) **Anordnung zur Erzeugung von elektrischer Energie**
Installation for generating electrical energy
Installation pour la génération d'énergie électrique

(30) Priorität: 19.11.1990 DE 4036823
(43) Veröffentlichungstag der Anmeldung: 27.05.1992
(73) Patentinhaber: Mach, Wenzel, 06847 Dessau (DE)
(72) Erfinder: Mach, Wenzel, 06847 Dessau (DE)
(74) Vertreter: Tragsdorf, Bodo, Dipl.-Ing.

(56) Entgegenhaltungen:
- EP-A- 0 290 833
- DE-A- 3 716 297
- NL-A- 8 802 695
- US-A- 3 486 943
- US-A- 3 492 162
- US-A- 4 644 751

## Beschreibung

Die Erfindung betrifft eine Anordnung zur Erzeugung von elektrischer Energie in einem gasbefeuerten Heißwasserbereiter wie Durchlauferhitzer, Heizkessel oder dergleichen, die zwischen einer Brennereinrichtung innerhalb des Heißwasserbereiters und einem zugehörigen Wärmeübertrager für die Bereitung des zu Wasch-, Koch- oder Heizzwecken verwendbaren Heißwassers gelegen ist.

Eine solche Anordnung ist aus der DE-Patentschrift 35 02 308 bereits bekannt, in der zwischen dem Verbrennunsraum und einem Wärmeübertrager ein Stirling-Motor geschaltet ist, um den Verbrennungsprozeß nicht nur für einen Heizungskreislauf und/oder eine Warmwasserversorgung auszunutzen, sondern damit gleichzeitig die elektrische Energieversorgung des Betreibers abzusichern. Ein solcher Wärme-Strom-Verbund bietet ins Auge springende Vorteile. So ist es zunächst möglich, den Wirkungsgrad einer gasbetriebenen Feuerstätte erheblich zu verbessern, auch wenn die Abgastemperatur nicht beliebig abgesenkt werden kann. Ferner gibt es beispielsweise im Haushalt lange Perioden, in denen der Bedarf an Wärmeenergie mit demjenigen an elektrischer Energie durchaus parallel verläuft. So steigt der Bedarf beider Energiearten im Winter und in der zweiten Tageshälfte, sinkt hingegen im Sommer und bei Sonneneinstrahlung ab. Eine Kopplung nicht nur des Verbrauchs, sondern auch der Erzeugung liegt demnach nahe, und vor allem gasbetriebene Feuerstätten sind dafür von vornherein gut geeignet, weil sie sauber und vollautomatisch betrieben werden können. Ihre geringe Kohlendioxid- und Schwefeldioxid-Exhalation ist außerdem wenig umweltbelastend. Allerdings ist es nicht sonderlich erwünscht, daß wie bei der bekannten Anordnung bewegliche, einem mechanischen Verschleiß unterworfene Bauelemente beteiligt sind.

Es ist deshalb die Aufgabe der Erfindung, eine Anordnung der eingangs näher bezeichneten Art für die Verwendung als gekoppelter Wärme-Elektrizitäts-Generator umzurüsten, bei der die Nachteile der bekannten Einrichtung vermieden und nur ruhende Bauelemente eingesetzt sind.

Erfindungsgemäß wird die Aufgabe gemäß dem Hauptanspruch dadurch gelöst, daß im Wirkungsbereich je einer gasgespeisten Brennerflamme ein elektrolytisches Brennstoffelement vorgesehen ist, dem in an sich bekannter Weise ein Konverter zur Umsetzung von im Prozeß nicht verbranntem Kohlenmonoxid in Wasserstoff vor- und ein Wechselrichter zur Umwandlung der generierten elektrischen Gleich- in elektrische Wechselspannung nachgeschaltet ist.

Weitere Merkmale der Erfindung enthalten die Unteransprüche.

Derartige Brennstoffelemente (oder "Brennstoffzellen") werden seit einiger Zeit in größerem Umfang und in vielfältigen Varianten - besonders was den Werkstoff für den Elektrolyten betrifft - bereitgestellt. Eine Übersicht bietet G. Friedrichs, Aspekte der Brennstoffzellentechnik, Gas wärme international 38 (1989), S. 480 - 487. Die dort kurz abgehandelten Ergebnisse des bisherigen Einsatzes derartiger, Wärme direkt in Elektroenergie transformierender Brennstoffelemente machen deutlich, daß insbesondere bei keramischen Elektrolyten bereits jetzt recht hohe Betriebstemperaturen zulässig sind, die trotzdem noch eine teilweise beachtliche Zellenspannung erreichbar werden lassen. Weil es zudem noch bei kleineren, im Haushalt gebräuchlichen Heizeinrichtungen erforderlich ist, die umgesetzte Enthalpie prozentual viel niedriger zu halten als in Kraftwerken, kann eine genügende Zellenspannung in Abhängigkeit von der Leistungsdichte eines solchen Brennstoffelementes durchaus sichergestellt werden. Auch die mit solchen Brennstoffelementen bisher erzielten Betriebszeiten sind beachtlich und gestatten einen über lange Zeit wartungsarmen Betrieb.

Die integrative Vereinigung einer großen Anzahl von Brennstoffelementen mit der Brennereinrichtung an einem Injektor- oder Gebläsebrenner gestattet es, derartige Anordnungen rationell in großen Stückzahlen und damit billig herzustellen, und auch in der Wartung ist ein so ausgestatteter Heizkessel recht unproblematisch.

In zweckentsprechender Ausnutzung der Lamellenbauweise lassen sich preisgünstige Registerheizungen herstellen, die in weitem Umfang dem erforderlichen Wärme- und Elektroenergie-Bedarf eines Verbrauchers angepaßt werden können und trotzdem mit einer Mindestanzahl von sich stets wiederholenden Bauteilen auskommen; sie sind so einer rationalisierten Massenfertigung bestens angepaßt, was bei billig herzustellenden Konsumgütern wesentlich ist. Gerade im Haushalt ist die parallele Erzeugung von Wärme- und Elektroenergie sehr sinnvoll, weil die Inanspruchnahme beider Energiearten über die Jahres- und Tageszeit oft synchron steigt oder fällt. Die erfindungsgemäße Anordnung ist dieser Tatsache gut angepaßt; Differenzen im Bedarf beider Energiearten lassen sich in gewissem Umfang über entsprechende Speicher abfangen.

Auf diese Weise wird die Primärenergie für die Heißwasserbereitung doppelt ausgenutzt, zumal die Abgastemperatur zumeist abgesenkt werden kann, ohne eine erforderliche Mindestgröße zu unterschreiten: der Wärmeentzug aus den Abgasen ist vergleichsweise gering.

Weitere Vorteile und die näheren Einzelheiten der Erfindung werden nachstehend an Hand der Zeichnung an einem Ausführungsbeispiel erläutert. Es zeigen
- Fig. 1: eine erfindungsgemäße Anordnung in schematischer Darstellung,
- Fig. 2: einen Injektorbrenner und
- Fig. 3: einen Gebläsebrenner für eine Anordnung nach Fig. 1, mit einem Brennstoffelemente-Aggregat nach der Erfindung,
- Fig. 4: eine Einzelheit A aus Fig. 2 oder Fig. 3 in vergrößerter Darstellung,
- Fig. 5: ein Heizregister gemäß der Erfindung und
- Fig. 6: einen Schnitt I - I entsprechend Fig. 5.

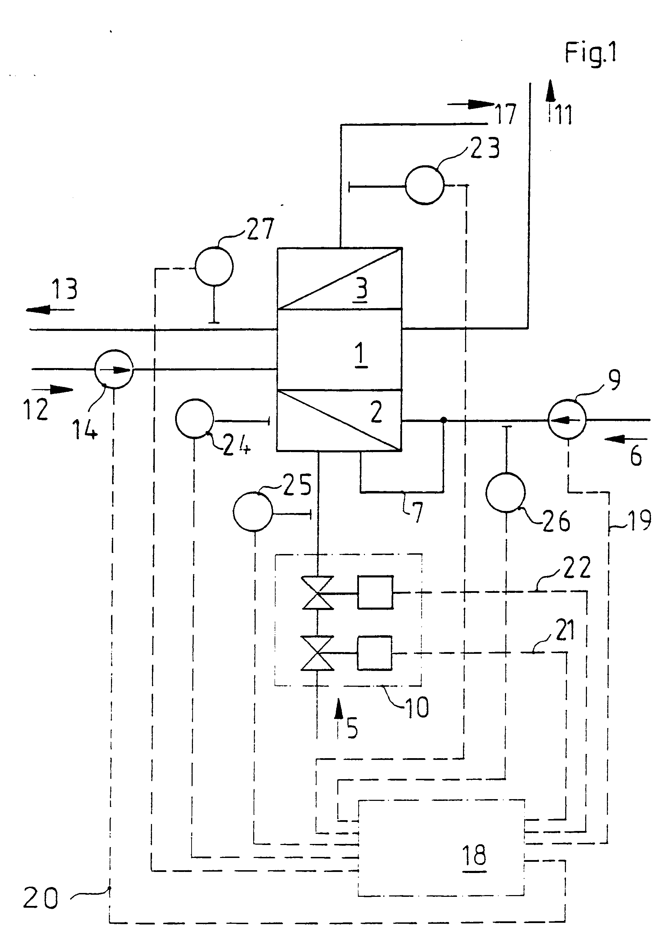

In der symbolischen und weitgehend vereinfachten Darstellung eines Heißwasserbereiters nach der Erfindung gemäß Fig. 1 ist ein Brennstoffelement 1 angegeben, dem in Strömungsrichtung des Heizgases ein Konverter 2 vorgeschaltet ist. Der Konverter 2 setzt alles vor dem Brennstoffelement 1 noch vorhandene Kohlenmonoxid in Kohlendioxid und Wasserstoff um, weil nur die Wasserstoff-Verbrennung das Brennstoffelement 1 aktiviert. Die gegebenenfalls verbleibenden Rückstände von Kohlendioxid können bei Bedarf in bekannter Weise in einem Abscheider ausgewaschen werden, der dann dem Brennstoffelement 1 nachgeschaltet sein muß.

Dem Brennstoffelement 1 ist ein Wechselrichter 3 nachgeschaltet, in dem die in dem Brennstoffelement 1 erzeugte Gleichspannung in eine Wechselspannung gewandelt wird, wie sie für den Verbraucher geeignet ist.

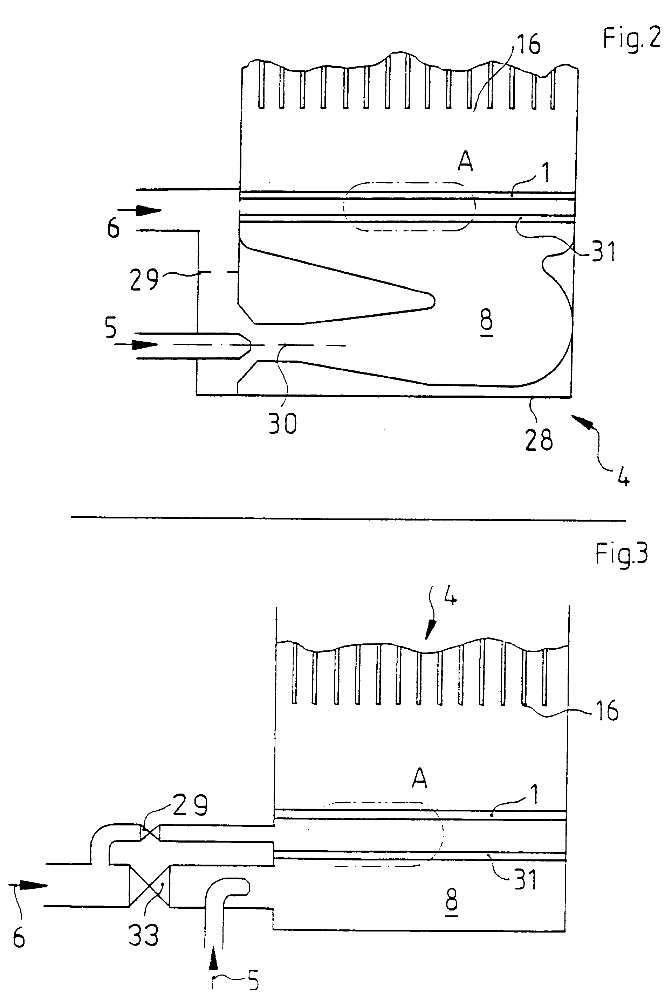

Zumindest das Brennstoffelement 1, das selbstverständlich stets in großer Anzahl als Aggregat verwendet wird, wie das weiter unten noch zu zeigen ist, gehört zu einer in Fig. 1 nicht weiter dargestellten Brennereinrichtung 4 (Fig. 2, 3 und 6), in welche außer dem Brenngas 5 auch eine Verbrennungsluft 6 in der durch die zugehörigen Richtungspfeile veranschaulichten Strömungsrichtung eingespeist wird. Da zumeist ein in einer Mischkammer 8 (Fig. 2 und 3) bereitetes Gas-Luft-Gemisch 5;6 verbrannt wird, ist ein Abzweig 7 der Verbrennungsluft 6 vorgesehen. Ein Gebläse 9 fördert die Verbrennungsluft 6. Im Strompfad des Brenngases 5 ist eine kombinierte Gasarmatur 10 angedeutet, die in Abhängigkeit von einigen Meßgrößen die Verbrennung steuert. Das Abgas 11 ist ebenfalls durch einen Richtungspfeil veranschaulicht.

Für einen an sich beliebigen Wärmeverbraucher sind je ein Wasserrücklauf 12 und Wasservorlauf 13 angedeutet, wobei im Wasserrücklauf 12 eine Umwälzpumpe 14 gelegen ist. Es ist ersichtlich, daß der erforderliche Wärmeübertrager 16 (Fig. 2, 3 und 6) nicht gesondert angegeben, sondern wie die Brennereinrichtung 4 durch das Brennstoffelement 1 mit charakterisiert ist.

Eine Wechselspannung 17 wird dem Wechselrichter 3 entnommen.

Alle bisher beschriebenen Funktionselemente sind in der Fig.1 ausgezogen dargestellt und veranschaulichen echte Stoff- oder Energieströme. Hingegen sind alle Meß- und Steuerleitungen gestrichelt gezeichnet; sie werden von einer zentralen Steuereinheit 18 aus betrieben. Das Gebläse 9 wird von einer Stelleitung 19, die Umwälzpumpe 14 von einer Stelleitung 20 angesteuert. Für die Gasarmatur 10 sind zwei Stelleitungen 21 und 22, etwa für ein Grundlastventil und ein temperaturabhängiges Regelventil, vorgesehen. Ein Spannungsbegrenzer 23 sorgt für die Absicherung der erzeugten Wechselspannung. Eine Zünd- und Flammenüberwachungseinrichtung 24 und ein Meßwertfühler 25 für den Druck des Brenngases 5, ein Meßwertfühler 26 für denjenigen der Verbrennungsluft 6 und ein Meßwertfühler 27 für die Temperatur im Wasservorlauf 13 vervollständigen die erfindungsgemäße Anordnung.

In der Fig.2 ist ein Injektorbrenner als Brennereinrichtung 4 für eine Anordnung gemäß Fig. 1 im Schnitt und schematisch gezeichnet. In einem Brennergehäuse 28 wird in einer Mischkammer 8 die Verbrennungsluft 6 mit dem Brenngas 5 gemischt, nachdem sie in bekannter Weise nach einer Drossel 29 das Brenngas 5 in einer Injektordüse 30 angesaugt hat. Die Verbrennung des Brenngas-Verbrennungsluft-Gemisches 5; 6 erfolgt in einem Brennerkamm 31, der unmittelbar an die Mischkammer 8 anschließt.

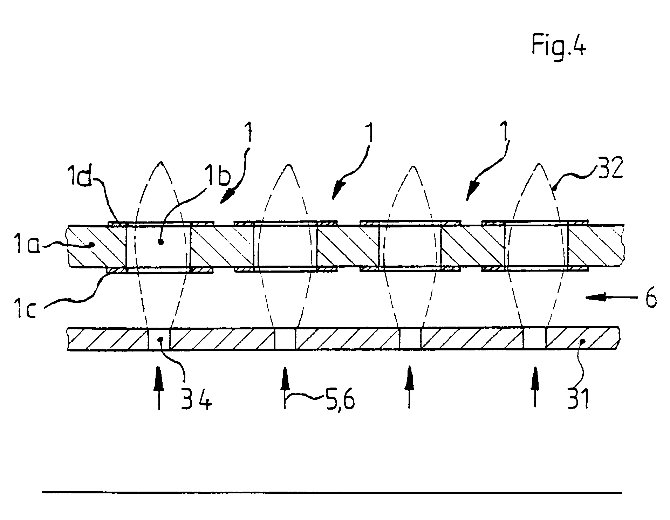

Der größte Teil der Verbrennungsluft 6 wird hinter dem Brennerkamm 31 bereitgestellt. Die Brennerflammen 32 (Fig. 4) durchsetzen dann die plattenförmig angeordneten Brennstoffzellen 1, bevor ihre Abgase in den anschließenden Wärmeübertrager 16 gelangen.

In ähnlicher Weise zeigt Fig. 3 einen Gebläsebrenner als Brennereinrichtung 4, der sich nur durch eine hier nicht vorhandene Injektordüse 30 und stattdessen ein zusätzliches Absperrventil 33 von der Anordnung der Fig. 2 unterscheidet.

Im vergrößerten Ausschnitt A aus Fig. 2 oder 3, wie er in der Fig. 4 gezeigt ist, ist zunächst wieder der Brennerkamm 31 zu erkennen; an einer Vielzahl von Brennerdüsen 34 bilden sich Brennerflammen 32 bei der Verbrennung des Gemisches aus Brenngas 5 und einem Teil der Verbrennungsluft 6, die durch die plattenförmig ausgebildeten Brennstoffelemente 1 gehen. Für diese ist ein flacher Festelektrolyt 1a vorgesehen, in dem sich in der Achse jeder Brennerdüse 34 eine Durchgangsbohrung 1b befindet, deren Durchmesser auf die Brennerflamme 32 abgestimmt ist. Das Brennstoffelement 1 wird vervollständigt durch eine als Kathode geschaltete kreisringförmige Elektrode 1c auf der dem Brennerkamm 31 zugewandten und eine ähnliche, als Anode geschaltete Elektrode 1d auf der dem Brennerkamm 31 abgewandten Seite des Festelektrolyts 1a, wobei die Elektroden 1c und 1d koaxial zur Durchgangsbohrung 1b und im übrigen in bekannter, nicht weiter dargestellter Weise zu einer EMK zusammengeschaltet sind. Sie bestehen vorteilhaft aus einer dünnen Platinschicht, mit der der als Folie gegossene und gebrannte Festelektrolyt 1a zunächst ganz beschichtet ist; die erforderlichen Teile der Durchgangsbohrungen 1b wie auch die Konturen der Elektroden 1c und 1d einschließlich der verknüpfenden gedruckten Schaltung können mittels Laser problemlos aus der Beschichtung abgearbeitet werden.

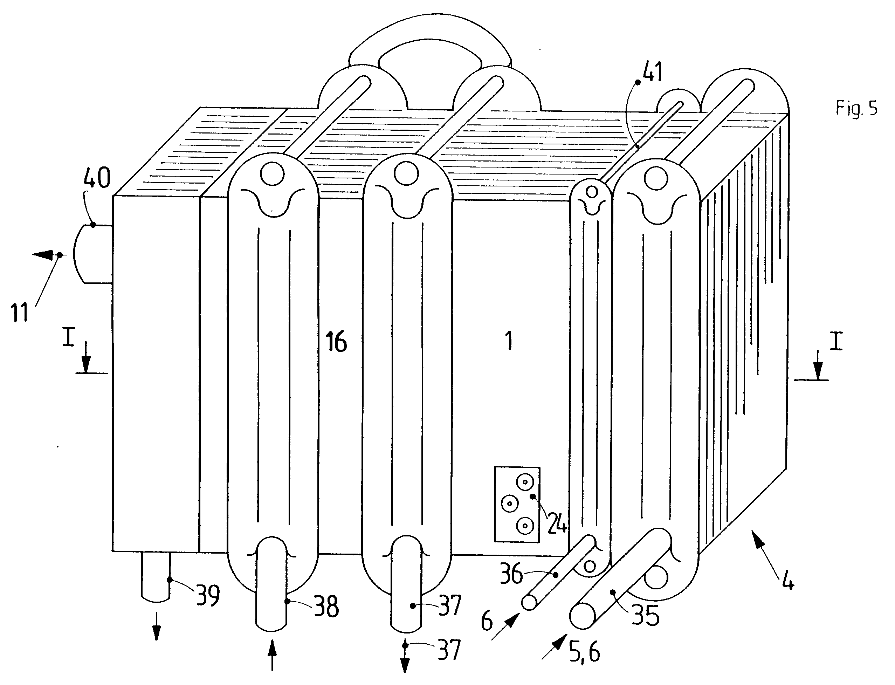

In der Fig. 5 ist eine Anordnung gezeigt, bei der ein registerförmiger Aufbau eines erfindungsgemäßen Heißwasserbereiters schematisch dargestellt ist. Einer Brennereinrichtug 4 wird über Rohrstutzen 35 und 36 das erforderliche Gasgemisch 5; 6 beziehungsweise die Verbrennungsluft 6 zugeführt. Im Bereich der Brennstoffelemente 1 befindet sich die Zünd- und Flammenüberwachungseinrichtung 24. Der Wärmeübertrager 16 enthält wiederum Rohrstutzen 37 und 38 für den Wasservorlauf 13 und den Wasserrücklauf 12; Rohrstutzen 39 und 40 sind für den Kondensatrücklauf und das Abgas 11 vorgesehen. Das Register ist in bekannter Weise aus Lamellen zusammengesetzt und wird durch Ankerschrauben 41 zusammengehalten.

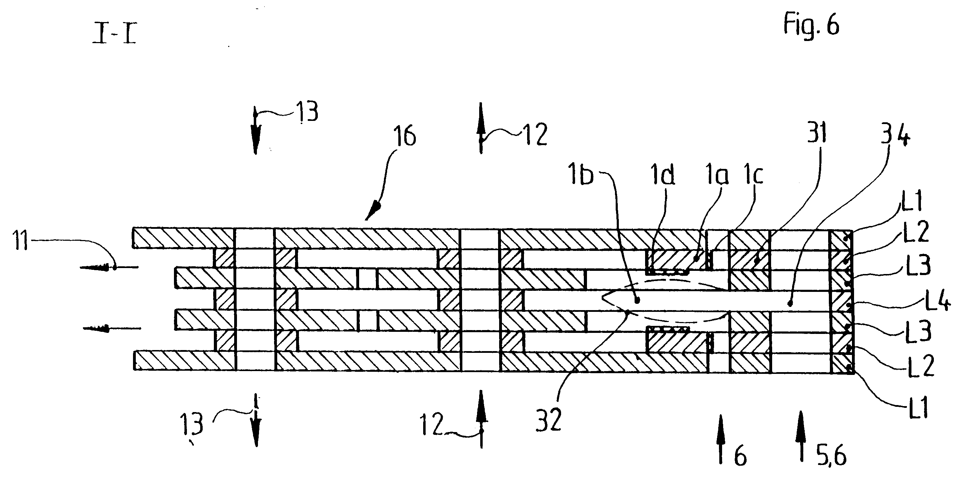

Die Fig. 6 zeigt einen Schnitt gemäß der Linie I-I in Fig. 5. Das Register besteht aus Lamellen L1, L2, L3, L4, wobei die Lamellen L1, L2, und L3 symmetrisch um die Lamelle L4 gepackt sind; es sind also für die hier eingesetzten sieben Lamellen nur 4 verschiedene Ausführungen erforderlich. Der funktionale Aufbau entspricht aber auch hier dem in Fig. 2 und 4 beschriebenen Schema, was auch durch die gleichen Bezugszahlen verdeutlicht wird. Allerdings sind hier die Elektroden 1c und 1d an den Längswänden der Durchgangsbohrungen 1b untergebracht.

Register dieser Art lassen sich nun ohne Schwierigkeiten koppeln, so daß ein Gesamtregister gebildet werden kann, wie es die jeweilige Aufgabenstellung erfordert.

## Patentansprüche

1. Anordnung zur Erzeugung von elektrischer Energie in einem gasbefeuerten Heißwasserbereiter, insbesondere Durchlauferhitzer oder Heizkessel, die zwischen einer Brennereinrichtung innerhalb des Heißwasserbereiters und einem zugehörigen Wärmeübertrager für die Bereitung des zu Wasch-, Koch- oder Heizzwecken verwendbaren Heißwassers gelegen ist, dadurch gekennzeichnet, daß im Wirkungsbereich je einer gasgespeisten Brennerflamme (32) mindestens ein elektrolytisches Hochtemperatur-Brennstoffelement (1) vorgesehen ist, dem in an sich bekannter Weise ein Konverter (2) zur Umsetzung von im Prozeß nicht verbranntem Kohlenmonoxid in Wasserstoff vor- und ein Wechselrichter (3) zur Umwandlung der generierten elektrischen Gleich- in elektrische Wechselspannung nachgeschaltet ist.

2. Anordnung nach Anspruch 1, dadurch gekennzeichnet, daß als Brennstoffelement (1) eine Brennstoffzelle mit einem festen Elektrolyten verwendet wird.

3. Anordnung nach einem der Ansprüche 1 oder 2, dadurch gekennzeichnet, daß als Brennstoffelement (1) eine Brennstoffzelle mit einem Karbonat als Elektrolyten verwendet wird.

4. Anordnung nach einem der Ansprüche 1 oder 2, dadurch gekennzeichnet, daß als Brennstoffelement (1) eine Brennstoffzelle mit einem oxidkeramischen Elektrolyten verwendet wird.

5. Anordnung nach einem der Ansprüche 1 bis 4, dadurch gekennzeichnet, daß dem Konverter (2) ein Gebläse (9) zur Einspeisung von Verbrennungsluft (6) in den Konverter (2) vorgeschaltet ist.

6. Anordnung nach einem der Ansprüche 1 bis 5, dadurch gekennzeichnet, daß dem Wechselrichter (3) ein Wechselspannungsbegrenzer (23) nachgeschaltet ist.

7. Anordnung nach einem der Ansprüche 1 bis 6, dadurch gekennzeichnet, daß für die Steuerung der Verbrennung ein zentrales Steuergerät (18) vorgesehen ist, das alle erforderlichen Meßwerte für den Druck (25) des Brenngases (5) und den Druck (26) der Verbrennungsluft (6), die Temperatur (27) des bereiteten Heißwassers und die erzeugte Wechselspannung (23) verarbeitet und eine Zünd- und Flammenüberwachungseinrichtung (24), das Gebläse (9) für die Verbrennungsluft (6), gegebenenfalls eine Umwälzpumpe (14) für den Wasserumlauf und Gasventile (10) für das Zündgas und die Brenngasversorgung steuert.

8. Anordnung nach einem der Ansprüche 1 bis 7, dadurch gekennzeichnet, daß die Brennstoffelemente (1) in der Brennereinrichtung (4) selbst angeordnet sind.

9. Anordnung nach einem der Ansprüche 1 bis 8, dadurch gekennzeichnet, daß die Brennstoffelemente (1) plattenförmig zwischen einem Brennerkamm (31) und einem auf dem Brennerkamm (31) aufgesetzten Wärmeübertrager (16) angeordnet sind, derart, daß zwischen dem Brennerkamm (31) und den Brennstoffelementen (1) ein Zwischenraum zur Zuführung der Verbrennungsluft (6) verbleibt.

10. Anordnung nach Anspruch 9, dadurch gekennzeichnet, daß die Brennstoffelemente (1) von einem plattenförmigen Festelektrolyt (1a) gebildet werden, der in der Achse jeder in dem Brennerkamm (31) vorgesehenen Brennerdüse (34) eine Durchgangsbohrung (1b) aufweist, die auf beiden Stirnseiten des Festelektrolyten (1a) von einer vorzugsweise ringförmigen Elektrode (1c; 1d) umgeben ist.

11. Anordnung nach einem der Ansprüche 1 bis 8, dadurch gekennzeichnet, daß die Brennstoffelemente (1) registerförmig zwischen einem Brennerkamm (31) und einem auf dem Brennerkamm (31) aufgesetzten Wärmeübertrager (16) angeordnet sind, derart, daß zwischen dem Brennerkamm (31) und den Brennstoffelementen (1) ein Zwischenraum zur Zuführung der Verbrennungsluft (6) verbleibt.

12. Anordnung nach Anspruch 11, dadurch gekennzeichnet, daß die Brennstoffelemente (1) von einem registerförmigen Festelektrolyt (1a) gebildet werden, der quer zu den Achsen der in dem Brennerkamm (31) vorgesehenen Brennerdüsen (34) eine schlitzförmige Durchtrittsöffnung (1b) besitzt, an der im Bereich jeder Brennerdüse (34) je eine Elektrode (1c; 1d) angebracht ist.

13. Anordnung nach einem der Ansprüche 11 und 12, dadurch gekennzeichnet, daß die Elektroden (1c; 1d) an den Längswänden der Durchtrittsöffnung (1b) vorgesehen sind.

14. Anordnung nach einem der Ansprüche 11 und 12, dadurch gekennzeichnet, daß die Elektroden (1c; 1d) an den Stirnseiten der Durchtrittsöffnung (1b) vorgesehen sind.

15. Anordnung nach einem der Ansprüche 11 bis 14, dadurch gekennzeichnet, daß das Gesamtregister (1; 4; 16) aus Brennereinrichtung (4), Brennstoffelementen (1) und einem oder mehreren Wärmeübertragern (16) aus flächigen Lamellen (L1 ..... L4) besteht, die für jedes Einzel-Register auch die Führung der Zu- und Abgase und des Zu- und Abwassers realisieren.

## Claims

1. System for production of electrical energy in a gas-fuelled hot-water apparatus, particularly a flow heater or boiler, which system is situated between a burner device inside the hot water apparatus and an associated heat conductor for the preparation of hot water usable for washing, cooking or heating purposes, characterised by the fact that in the zone of action of a gas-fed burner flame (32) in each case at least one electrolytic high-temperature fuel element (1) is provided which in a manner known per se, is preceded by a converter (2), for the conversion of carbon monoxide remaining unburnt in the process into hydrogen, and followed by an inverter (3), for the conversion of the direct voltage generated into electrical alternating voltage.

2. System in accordance with Claim 1, characterised by the fact that the fuel element (1) used is a fuel cell with a solid electrolyte.

3. System in accordance with either of Claims 1 and 2, characterised by the fact that the fuel element (1) used is a fuel cell with an electrolyte consisting of a carbonate.

4. System in accordance with either of Claims 1 and 2, characterised by the fact that the fuel element (1) used is a fuel cell with an oxide ceramic electrolyte.

5. System in accordance with any one of Claims 1 to 4, characterised by the fact that the converter (2) is preceded in series by a blower (9) for feeding combustion air (6) into the converter (2).

6. System in accordance with any one of Claims 1 to 5, characterised by the fact that an alternating voltage limiter (23) is connected in the output circuit of the inverter (3).

7. System in accordance with any one of Claims 1 to 6, characterised by the fact that for the control of the combustion a central control apparatus (18) is provided which processes all the necessary measured values for the pressure (25) of the combustion gas (5) and the pressure (26) of the combustion air (6), the temperature (27) of the prepared hot water and the alternating voltage (23) generated, and which controls an ignition and flame monitoring device (24), the blower (9) for the combustion air (6), possibly a circulation pump (14) for the water circulation and gas valves (10) for the ignition gas and the combustion gas supply.

8. System in accordance with any one of Claims 1 to 7, characterised by the fact that the fuel elements (1) are arranged itself on the burner device (4).

9. System in accordance with any one of Claims 1 to 8, characterised by the fact that the fuel elements (1) are arranged stacked between a burner plate (31) and a heat conductor (16) mounted on the burner plate (31), in such a way that between the burner plate (31) and the fuel elements (1) an intermediate space is left for the supply of the combustion air (6).

10. System in accordance with Claim 9, characterised by the fact that the fuel elements (1) are formed by a plate-shaped solid electrolyte (1a) which on the axis of each burner nozzle (34) provided on the burner plate (31) has a through boring (1b) surrounded on both end faces of the solid electrolyte (1a) by a preferably annular electrode (1c;1d).

11. System in accordance with any one of Claims 1 to 8, characterised by the fact that the fuel elements (1) are arranged in a register between a burner plate (31) and a heat conductor (16) mounted on the burner plate (31) in such a way that between the burner plate (31) and the fuel elements (1) an intermediate space is left for the supply of the combustion air (6).

12. System in accordance with Claim 11, characterised by the fact that the fuel elements (1) are formed by a matrix of solid electrolyte (1a) which, transversally to the axes of the burner nozzles (34) provided in the burner plate (31), has a slit-shaped orifice (1b) on which an electrode (1c;1d) is mounted in the zone of each burner nozzle (34).

13. System in accordance with either of Claims 11 and 12, characterised by the fact that the electrodes (1c;1d) are provided on the longitudinal walls of the orifice (1b).

14. System in accordance with either of Claims 11 and 12, characterised by the fact that the electrodes (1c;1d) are provided on the longitudinal walls and faces of the orifice (1b).

15. System in accordance with any one of Claims 11 to 14, characterised by the fact that the complete matrix assembly (1;4;16) consists of burner system (4), fuel elements (1) and one or more heat conductors (16) formed by thin plates (L1...L4) which, for each individual matrix, guide the incoming and waste gases and incoming and waste water.

## Revendications

1. Dispositif de production d'énergie électrique, dans un préparateur d'eau chaude, chauffé par la combustion d'un gaz, en particulier un réchauffeur à circulation ou une chaudière de chauffage, qui est placé entre un dispositif à brûleurs, à l'intérieur du préparateur d'eau chaude et un appareil de transfert de chaleur afférent, pour la préparation de l'eau chaude utilisable à des fins de lavage, de cuisine ou de chauffage, caractérisé en ce que, dans la zone d'action de chaque flamme de brûleur (32) alimentée en gaz, est prévu au moins un élément à combustible à température élevée (1) de type électrolytique, en amont duquel est mis en circuit, de manière connue en soi, un convertisseur (2) destiné à réaliser une conversion donnant de l'hydrogène, à partir du monoxyde de carbone n'ayant pas brûlé dans le processus et en aval duquel est mis en circuit un onduleur (3) destiné à convertir la tension continue électrique produite en une tension alternative.

2. Dispositif selon la revendication 1, caractérisé en ce qu'est utilisé comme élément à combustible (1) une pile à combustible à électrolyte solide.

3. Dispositif selon l'une des revendications 1 ou 2, caractérisé en ce qu'est utilisé comme élément à combustible (1) une pile à combustible, avec un carbonate faisant office d'électrolyte.

4. Dispositif selon l'une des revendications 1 ou 2, caractérisé en ce qu'est utilisé comme élément combustible (1) une pile à combustible avec un électrolyte en céramique, constitué d'un oxyde.

5. Dispositif selon l'une des revendications 1 à 4, caractérisé en ce qu'en aval du convertisseur est mise en circuit une soufflante (9) destinée à injecter de l'air de combustion (6) dans le convertisseur (2).

6. Dispositif selon l'une des revendications 1 à 5, caractérisé en ce qu'en aval de l'onduleur (3) est mis en circuit un limiteur de tension alternative (23).

7. Dispositif selon l'une des revendications 1 à 6, caractérisé en ce que, pour la commande de la combustion, est prévu un appareil de commande (18) central, qui traite toutes les valeurs de mesure nécessaires pour la pression (25) du gaz à brûler (5) et la pression (26) de l'air de combustion (6), la température (27) de l'eau chaude préparée et la tension alternative (23) produite, et commande un dispositif de surveillance d'allumage et de flamme (24), la soufflante (9) destinée à l'air de combustion (6), le cas échéant une pompe de circulation (14) destinée à la circulation de l'eau et des soupapes à gaz (10) destinées au gaz d'allumage et commande l'alimentation en gaz de combustion.

8. Dispositif selon l'une des revendications 1 à 7, caractérisé en ce que les éléments à combustible (1) sont disposés dans le dispositif à brûleurs (4) lui-même.

9. Dispositif selon l'une des revendications 1 à 8, caractérisé en ce que les éléments à combustible (1) sont disposés sous forme de plaques entre un râtelier à brûleur (31) et un appareil de transfert de chaleur (16) placé sur le râtelier à brûleur (31), de manière qu'entre le râtelier à brûleur (31) et les éléments à combustible (1) subsiste un espace intermédiaire destiné à l'amenée de l'air de combustion (6).

10. Dispositif selon la revendication 9, caractérisé en ce que les éléments à combustible (1) sont constitués par un électrolyte solide (1a) se présentant sous forme de plaque, présentant dans l'axe de chaque buse de brûleur (34) prévue dans le râtelier à brûleur (31) un perçage de passage (1b) entouré sur les deux faces frontales de l'électrolyte solide (1a) par une électrode (1c; 1d), de préférence annulaire.

11. Dispositif selon l'une des revendications 1 à 8, caractérisé en ce que les éléments à combustible (1) sont disposés en forme de registre entre un râtelier à brûleur (31) et un appareil de transfert de chaleur (16) placé sur le râtelier à brûleur (31), de manière qu'entre le râtelier à brûleur (31) et les éléments à combustible (1) subsiste un espace intermédiaire destiné à l'amenée de l'air de combustion (6).

12. Dispositif selon la revendication 11, caractérisé en ce que les éléments à combustible (1) sont constitués par un électrolyte solide (1a) en forme de registre, ayant transversalement par rapport aux axes des buses de brûleur (34) prévues dans le râtelier à brûleur (31), une ouverture de passage (1b) en forme de fente, sur laquelle une électrode (1c; 1d) est montée dans la zone de chaque buse de brûleur (34).

13. Dispositif selon l'une des revendications 11 et 12, caractérisé en ce que les électrodes (1c; 1d) sont prévues sur les parois longitudinales de l'ouverture de passage (1b).

14. Dispositif selon l'une des revendications 11 et 12, caractérisé en ce que les électrodes (1c; 1d) sont prévues sur les faces frontales de l'ouverture de passage (1b).

15. Dispositif selon l'une des revendications 11 à 14, caractérisé en ce que le registre global (1; 4; 16) est constitué du dispositif à brûleurs (4), des éléments à combustible (1) et d'un ou plusieurs appareils de transfert de chaleur (16) constitués de lamelles (L1 .... L4) plates, réalisant pour chaque registre individuel également le guidage des gaz d'amenée et d'évacuation et de l'eau d'amenée et d'évacuation.
